# EUROPEAN PATENT APPLICATION

(11) **EP 0 729 239 A1**
(43) Date of publication of application: **28.08.1996**
(21) Application number: 96102756.2
(22) Date of filing: 23.02.1996
(51) Int. Cl.: H04B 1/44, H01Q 1/52, H01P 1/15, G01S 7/03

(54) **Antenna sharing device**

(30) Priority: 24.02.1995 JP 36645/95
(71) Applicant: MURATA MANUFACTURING CO., LTD., Nagaokakyo-shi Kyoto-fu 226 (JP)
(72) Inventor: Atokawa, Masayuki, c/o Murata Manuf. Co., Ltd., Nagaokakyo-shi, Kyoto-fu (JP)
(74) Representative: Schoppe, Fritz, Dipl.-Ing.

(57) **Abstract**

An antenna sharing device (1) having an antenna interface (6) to be connected with an external antenna (5), a transmitting interface (7) to be connected with an external transmitting unit (9), a receiving interface (8) to be connected with an external receiving unit (10), a transmitting filter (2) connected with the transmitting interface (7), a receiving filter (3) connected with the receiving interface (8), and a switching circuit (4) connected with the transmitting filter (2), the receiving filter (3), and the antenna interface (6). The switching circuit (4) selectively switches the connections between the antenna interface (6), the transmitting filter (2), and the receiving filter (3). The switching circuit (4) electrically separates a receiving circuit and a transmitting circuit from each other and thereby enables suitable filters (2, 3) to be used in the receiving and transmitting circuits.

## Description

### Background of the Invention

### Field of the Invention

The present invention relates to an antenna sharing device and more particularly to an antenna sharing device for use in two-way radio communicating equipment.

### Descriptions of the Prior Art

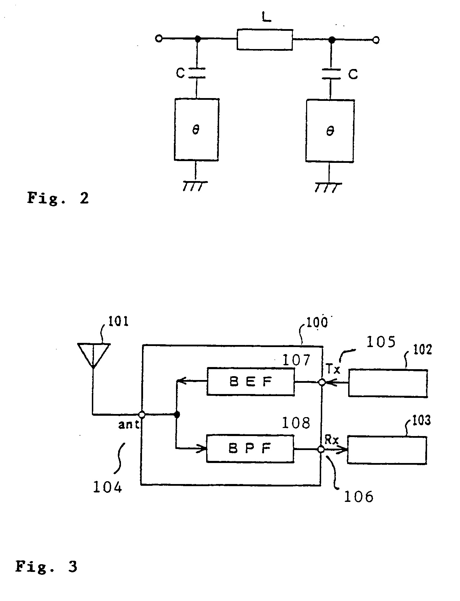

A conventional antenna sharing device (duplexer) 100 shown in FIG. 3 comprises an antenna terminal 104 to be connected with an antenna 101, a transmitting terminal 105, a receiving terminal 106, a band elimination filter (BEF) 107, and a band pass filter (BPF) 108. Dielectric filters or the like are used as the BEF and the BPF.

In the conventional antenna sharing device, the transmitting terminal 105 and the receiving terminal 106 are connected together via the BEF 107 and the BPF 108. Thus a signal generated by a transmitting circuit passes through the BEF 107 and the BPF 108 to a receiving circuit 103, and a signal received by the antenna 101 passes through the BEF 107 to the transmitting circuit. To attenuate such signals, the BEF 107 is designed to thoroughly attenuate a signal with a frequency within a receiving frequency range, while the BPF 108 is designed to thoroughly attenuate a signal with a frequency within a transmitting frequency range.

However, it is difficult to provide the BEF 107 with sufficiently high filter attenuation performance in a receiving frequency range and sufficiently low filter attenuation performance in a transmitting frequency range. It is also hard to provide the BPF 108 with sufficiently high filter attenuation performance in a transmitting frequency range and sufficiently low filter attenuation performance in a receiving frequency range.

Such is also the case when a low-pass filter (LPF) is used in place of the BEF 107. In other words, a filter designed with emphasis on attenuation performance outside a transmitting band inevitably causes an increase in loss in a transmitting band.

What is worse, even a surface acoustic wave (SAW) filter does not provide any improvement. Since a transmitting circuit generates a powerful transmitting signal, using a low-wattage SAW filter as the BPF 108 in a conventional antenna sharing device that is designed so that a transmitting signal enters a receiving filter does not allow the resonator to be reduced in size and weight.

### Summary of the Invention

The present invention provides an antenna sharing device having a switching circuit that electrically separates a receiving circuit and a transmitting circuit from each other and allows transmitting and receiving filters to be more freely selected when an antenna sharing device is designed. This leads to a small, light antenna sharing device causing little transmitting and receiving signal loss.

More specifically, an aspect of the present invention provides an antenna sharing device having an antenna interface to be connected with an external antenna; a transmitting interface to be connected with an external transmitting unit; a receiving interface to be connected with an external receiving unit; a transmitting filter connected with the transmitting interface; a receiving filter connected with the receiving interface; and a switching circuit connected with the transmitting filter, the receiving filter, and the antenna interface, in which antenna sharing device the switching circuit switches the connections between the antenna interface, transmitting filter, and receiving filter.

Another aspect of the present invention provides the antenna sharing device having a control interface to be connected with an external control unit and the switching circuit, in which antenna sharing device the switching circuit switches the connections between the antenna interface, transmitting filter, and receiving filter in response to a control signal from the external control unit.

Still another aspect of the present invention provides an antenna sharing device wherein the transmitting filter is a low-pass filter.

A further aspect of the present invention provides an antenna sharing device wherein the transmitting filter is a dielectric filter.

A further aspect of the present invention provides an antenna sharing device wherein the receiving filter is a dielectric filter.

A still further aspect of the present invention provides an antenna sharing device wherein the receiving filter is a surface acoustic wave filter.

These and other aspects of the present invention will become apparent in the description below.

In an antenna sharing device according to the present invention, filters causing the least loss in the frequency range of signals to be treated can be used in the transmitting and receiving circuits, since neither transmitted nor received signals enter undesired circuits.

In addition, electrically separating the receiving circuit and the transmitting circuit from each other allows a small, light low-wattage filter to be used in the receiving circuit.

Other features and advantages of the present invention will become apparent from the following description of the invention which refers to the accompanying drawings.

### Brief Description of the Drawings

FIG. 1 is a schematic diagram of an antenna sharing device according to an embodiment of the present invention;
FIG. 2 is an equivalent-circuit diagram of a band elimination filter using a dielectric filter; and
FIG. 3 is a block diagram of a conventional antenna sharing device.

### Detailed Description of the Preferred Embodiments

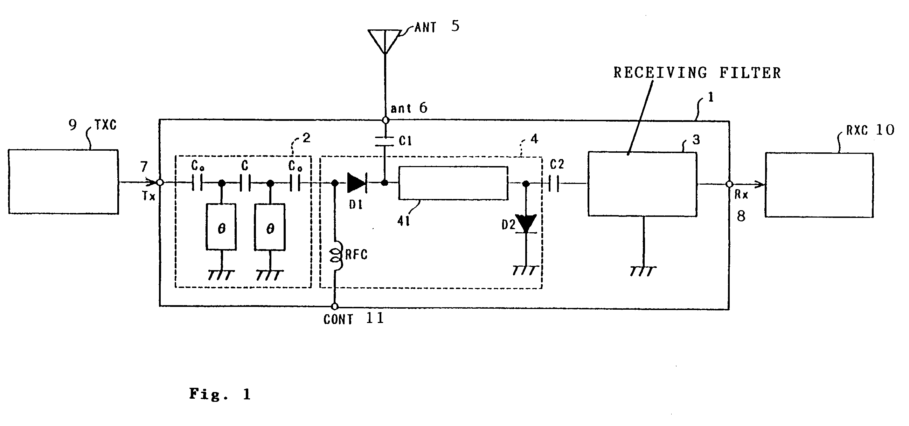

As shown in FIG. 1, an antenna sharing device 1 comprises a transmitting filter 2, a receiving filter 3, and a switching circuit 4 using diode switches. These components may be disposed on one dielectric substrate or the like.

The antenna sharing device 1 is also provided with interface terminals 6, 7, and 8 to be connected with an antenna 5, a transmitting circuit 9, and receiving circuit 10, respectively.

The transmitting filter 2, whose two dielectric coaxial resonators θ are connected in series with each other via a capacitor C, is a low-pass filter filtering out signals within a predetermined transmitting band from those transmitted by the transmitting circuit 9. More than two dielectric coaxial resonators θ may be used as required.

Alternatively, the transmitting filter may comprise a band elimination filter as shown in FIG. 2. In this filter, two or more units, each including a capacitor C and a dielectric coaxial resonator θ connected in series with each other, are connected in series with each other via an inductance L, comprising a transmission line. The transmitting filter 2 may be a BPF or BEF in which the dielectric coaxial resonators θ are replaced by strip lines. However, for attaining a high Q value (high sharpness) and reducing loss in a passing band, the filter 2 preferably consists of dielectric coaxial resonators θ.

The receiving filter 3 is a band pass filter filtering signals received from the antenna 5. The embodiment uses an SAW filter as the receiving filter. Of course, a dielectric filter can be used as the receiving filter 2, but a small, light SAW filter is more economical than a dielectric filter.

The switching circuit 4 includes two PIN diodes D1 and D2, a λ/4 phase circuit 41, and a choke coil RFC which blocks high-frequency signals in the pass band.

In the switching circuit 4, the diode D1, the λ/4 phase circuit 41, and the diode D2 are connected in series with each other in that order. The anode of the diode D1 is connected with the output terminal of the transmitting filter 2 and with a switching circuit control interface terminal 11 via the choke coil RFC. The cathode of the diode D1 is connected with an antenna terminal 6 via a connection capacitor C1 and with the λ/4 phase circuit.

The cathode of the diode D2 is grounded. The anode of the diode D2 is connected with the SAW filter via a connection capacitor C2 and directly with the λ/4 phase circuit 41.

The λ/4 phase circuit 41 which has, for example, a λ/4-wavelength transmission line, prevents signals from the transmitting filter 2 from entering the receiving filter 3. The line constant is preset so that the input impedance in the direction from diode D1 toward diode D2 becomes extremely high in a transmission band when the diode D2 is energized.

The operation of the antenna sharing device 1 is described below.

The operating condition of the antenna sharing device 1 varies with the level of a signal applied to the switching circuit control terminal 11. When a high-level signal is applied to the terminal 11, the antenna sharing device 1 connects the transmitting circuit 9 to the antenna. On the other hand, when a low-level signal is applied to the terminal 11, the antenna sharing device 1 connects the receiving circuit 10 to the antenna. Therefore, applying high and low level signals alternately to the terminal 11 allows the antenna 5 to be selectively used as a transmitting antenna and a receiving antenna in a time sharing fashion. The timing for switching the level of the signal may be appropriately defined to adopt to a system in which the antenna sharing device is used. The change of the level my be triggered by a manual operation of a reception/transmission changing switch (not shown). Also, the level may be switched every second automatically. Any switching period can be selected as fas as the switching characteristics of the antenna sharing device permits.

### (1) Terminal 11 is at a high level.

When the terminal 11 is at a high level, a current passes through the diodes D1 and D2 in the forward direction. Thus the transmitting circuit 2 and the antenna terminal 6 are connected together, so that a signal generated by the transmitting circuit is transmitted through the transmitting filter 2, diode D1, and connection capacitor C1 to the antenna 5. On the other hand, the transmitting circuit output signal does not pass to ground via the diode D2 because the λ/4 phase circuit blocks the signal.

Further, a signal received by the antenna 5 does not reach the receiving filter 3 because it passes through the λ/4 phase circuit and the diode D2 to ground.

### (2) Terminal 11 is at a low level.

When the terminal 11 is at a low level, the diodes D1 and D2 are reverse-biased. This causes the continuity between the transmitting filter 2 and the antenna terminal 6 to be interrupted, so that an output signal from the transmitting circuit is not transmitted to the antenna terminal 6.

However, a signal received by the antenna 5 passes through the λ/4 phase circuit and is transmitted to the receiving filter 3 because current between the diode D2 and ground is blocked.

The invention may be embodied in other specific forms without departing from the spirit or essential characteristics thereof. For example, the switching circuit described above may use field effect transistors in place of the PIN diodes. The present embodiment is therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An antenna sharing device having:
an antenna interface (6) for being connected with an external antenna,
a transmitting interface (7) for being connected with an external transmitting unit (9),
a receiving interface (8) for being connected with an external receiving unit (10),
a transmitting filter (2) connected with said transmitting interface (7),
a receiving filter (3) connected with said receiving interface (8), and
a switching circuit (4) connected with said transmitting filter (2), said receiving filter (3), and said antenna interface (6),
wherein said switching circuit (4) selectively connects said antenna interface (6) to either said transmitting filter (2) or said receiving filter (3).

2. The antenna sharing device according to claim 1, said antenna sharing device further comprising a control interface (11) for being connected with an external control unit and connected with said switching circuit (4),
wherein said switching circuit (4) selectively connects said antenna interface (6) to either said transmitting filter (2) or said receiving filter (3) in response to a control signal received from said control interface.

3. The antenna sharing device according to claim 1, wherein said switching circuit (4) comprises:
a choke coil connected with said control interface (11),
a first diode (D1),
a λ/4 phase circuit (41), and
a second diode (D2) , one end of which is grounded, said choke coil, said first diode (D1), said λ/4 phase circuit (41), and said second diode (D2) being connected in series with each other,
an output from the said transmitting filter (2) being connected with a connection point between said choke coil and said first diode (D1),
said antenna interface (6) being connected with a connection point between said first diode (D1) and said λ/4 phase circuit (41), and
an input to said receiving filter (3) is connected with a connection point between said λ/4 phase circuit (41) and said second diode (D2).

4. The antenna sharing device according to claim 1, wherein said transmitting filter (2) is a low-pass filter.

5. The antenna sharing device according to claim 4, wherein said transmitting filter (2) is a dielectric filter.

6. The antenna sharing device according to claim 1, wherein said transmitting filter (2) is a dielectric filter.

7. The antenna sharing device according to claim 4, wherein said receiving filter (3) is a surface acoustic wave filter.

8. The antenna sharing device according to claim 1, wherein said transmitting filter (2) is a band-elimination filter.

9. The antenna sharing device according to claim 8, wherein said transmitting filter (2) is a dielectric filter.

10. The antenna sharing device according to claim 8, wherein said receiving filter (3) is a surface acoustic wave filter.

11. The antenna sharing device according to claim 1, wherein said receiving filter (3) is a surface acoustic wave filter.

12. The antenna sharing device according to claim 1, wherein said transmitting filter (2) includes a first dielectric coaxial resonator, a capacitor, and a second dielectric coaxial resonator which are connected in series with each other,
one end of said first dielectric coaxial resonator and one end of said second dielectric coaxial resonator are grounded,
said transmitting interface (7) is connected with a connection point between said first dielectric coaxial resonator and said capacitor, and
one end of said first diode (D1) is connected with a connection point between said second dielectric coaxial resonator and said capacitor.

13. The antenna sharing device according to claim 1, wherein said transmitting filter (2) includes a first dielectric coaxial resonator, a first capacitor, an inductance, a second capacitor, and a second dielectric coaxial resonator which are connected in series with each other,
one end of said first dielectric coaxial resonator and one end of said second dielectric coaxial resonator are grounded,
said transmitting interface (7) is connected with a connection point between said first capacitor and said inductance, and
one end of said first diode (D1) is connected with a connection point between said second capacitor and said inductance.

14. A method for controlling an antenna sharing device having an antenna interface (6) for being connected with an external antenna; a transmitting interface (7) for being connected with an external transmitting unit (9); a receiving interface (8) for being connected with an external receiving unit (10); a first filter connected with said transmitting interface (7); a second filter connected with said receiving interface (8); and a switching circuit (4) connected with said first filter, said second filter, and said antenna interface (6), said method comprising the steps of:
connecting said first filter with said antenna interface (6) via said switching circuit (4),
disconnecting said first filter from said antenna interface (6) after a predetermined time has elapsed,
connecting said second filter with said antenna interface (6) via said swithcing circuit (4), and
disconnecting said second filter from said antenna interface (6) and reconnecting said first filter with said antenna interface (6) via said switching circuit (4) after a predetermined time has elapsed.
